# EUROPÄISCHE PATENTANMELDUNG

(11) **EP 1 046 534 A2**
(43) Veröffentlichungstag der Anmeldung: **25.10.2000**
(21) Anmeldenummer: 00108642.0
(22) Anmeldetag: 20.04.2000
(51) Int. Cl.: B60J 10/12

(54) **Deckel zum Verschliessen einer Dachöffnung in einem Fahrzeugdach**

(30) Priorität: 22.04.1999 DE 19918150
(71) Anmelder: Webasto Vehicle Systems International GmbH, 82131 Stockdorf (DE)
(72) Erfinder: Brandner, Hans, 85221 Dachau (DE)
(74) Vertreter: Wiese, Gerhard

(57) **Zusammenfassung**

Ein Fahrzeugdach hat wenigstens zwei ausstellbare Deckelelemente zum wahlweise Verschließen oder wenigstens teilweisen Freigeben von einer Dachöffnung, mit seitlich entlang der Dachöffnung längs verlaufenden Wasserrinnen, einer in Fahrtrichtung an der Vorderkante des Deckelelements quer angeordneten wulstförmige Dichtung, die bei geschlossenem Dach den Spalt zwischen benachbarten Deckelelementen dichtend ausfüllt, einer ersten vorderhalb der wulstförmigen Dichtung angeordneten primären Rinne und einer voderhalb der primären Rinne angeordneten sekundären Rinne derart, daß zwei kaskadenförmig angeordnete Rinnen ausgebildet werden, wobei die Endseiten der primären und der sekundären Rinne über den seitlich entlang der Dachöffnung längs verlaufenden Wasserrinnen angeordnet sind, um bei ausgestelltem Deckelelement auf dem Deckelelement befindliches Wasser abzuleiten.

## Beschreibung

Die Erfindung bezieht sich auf einen Deckel aus durchsichtigem oder durchscheinendem Material, insbesondere Glasdeckel, zum Verschließen einer Dachöffnung in einem Fahrzeugdach, mit einem randseitigen Deckelinnenblech, das mit dem Deckel durch eine zumindest teilweise am Deckelrand umlaufende Kunststoffumschäumung verbunden ist, wobei ein Teil des Deckelinnenblechs anschließend an die Kunststoffumschäumung einwärts von dieser vorsteht und parallel zur Deckelinnenseite verläuft.

Bislang ist es üblich, zwischen der Deckelunterseite und dem Deckelinnenblech zumindest ein Dichtelement anzuordnen, um die erforderliche Dichtigkeit zwischen diesen beiden Bauelementen zu gewährleisten. Ein Beispiel eines derartigen Deckels ist aus der DE 37 42 719 A1 bekannt. Bei diesem bekannten Deckel weist das Deckelinnenblech einwärts vom Außenrand des Deckels eine Auswölbung auf, die an der Innenseite des Deckels anliegt und eine Begrenzung für das Material der Kunststoffumschäumung beim Anschaumen dieses Kunststoffmaterials an den Deckel bildet. Zwischen dieser Auswölbung und der Außenseite des Deckelinnenblechs ist eine Dichtung angeordnet, die bei der Herstellung des Deckels zunächst auf der Innenseite des Deckels angeordnet werden muß, bevor das Deckelinnenblech auf dem Deckel angeordnet und randseitig zusammen mit dem Deckel umschäumt wird. Dieser Deckel ist aufgrund der Verwendung eines speziellen Dichtelements und dem damit verbundenen zusätzlichen Herstellungsschritt aufwendig.

Ein weiterer Deckel der eingangs genannten Art ist aus der DE 35 06 009 C3 bekannt. Bei diesem bekannten Deckel ist ein Dichtelement in einer Eintiefüng des Deckelinnenblechs zwischen diesem und der Deckelinnenseite angeordnet und bildet eine Begrenzung für die Dichtung schießendes Wasser in die seitlich verlaufenden Rinnen geleitet wird.. Bei dieser Lösung ist es jedoch nachteilig, daß man in der Wahl und in der Gestaltung des Himmels eingeschränkt ist. Weiterhin ist der Himmel ein unverzichtbarer Bestandteil eines derartigen Dachaufbaus geworden, der bei einer Dachkonstuktion aus lichtdurchlässigen Deckelelementen nicht durch einen Rollo oder einen verschiebbaren Plattenhimmel ersetzbar ist.

Die DB 42 17 151 C1 zeigt in einer Ausführungsform einen Dachaufbau aus einer Vielzahl von Deckelelementen, wobei die Deckelelemente aus Strangpresselementen aufgebaut sind. Bei geschlossenem Dach wird ein Spalt zwischen den aneinandergrenzenden Deckelelementen ausgebildet: In Fahrtrichtung vor diesem Spalt befindet sich eine Dichtung, die zusammen mit dem Spalt eine Rinne ausbildet, und vorderhalb der Dichtung ist eine einstückig mit dem Deckelelement ausgebildete vordere Rinne angeordnet. Nachteilig an dieser Anordnung ist, daß die durch den Spalt und die Dichtung ausgebildete Rinne dauernd zur Umgebung hin geöffnet ist und damit unter Umständen bereits mit Wasser angefüllt ist, so daß beim Öffnen des Daches dieser Spalt bzw. diese Rinne kein Wasser mehr aufnehmen kann und das gesamte von einem Deckelelement abfließende Wasser von der vorderen Rinne aufgenommen werden muß, die dann die Wasserableitung in die seitlichen Rinnen nicht mehr ausführen kann, so daß Wasser ins Fahrzeuginnere gelangen kann. Weiterhin kann sich der Spalt im Laufe der Zeit mit Schmutz, wie Laub oder dergleichen zusetzen, so daß über den Spalt kein Wasser mehr abfließen kann. Darüberhinaus kann der Spalt zu nicht unerheblichen Windgeräuschen beim Fahrbetrieb des Fahrzeugs führen.

Eine weitere zur Dachanordnung gemäß der DE 42 17 151 C1 prinzipiell ähnliche Dachanordnung ist in der DE 41 29 860 C1 dargestellt.

Die DE 44 43 525 C1 zeigt eine weitere aus hohlprofilartigen Lamellen bestehende Dachanordnung. Im Stoßbereich zweier aneinander grenzender Lamellen ist eine elastische Dichtung an einem Wasserablauf des hinteren Lamllenelements angeordnet und weist einen einstückig angeformten elastisch biegsamen Dichtungsabschnitt auf, der durch eine Stoßkante der beweglichen, vorderen Dachlamelle abhängig von einer Öffnungs- oder Schließbewegung dieser Dachlamelle zwischen einer entspannten, einen Schwallwasserschutz bildenden, nach oben ausgestellten Ruheposition und einer den Wasserablauf dicht überdeckenden, den Spalt zwischen benachbarten Lamellenelementen ausfüllenden Belastungsposition beweglich ist. In Fahrtrichtung vorderhalb des beweglichen Dichtungsabschnitts ist an der Dichtungsanordnung eine zusätzliche etwas kleinere Wasserrinne vorgesehen.

Nachteilig an dieser Anordnung ist, daß der bewegliche Dichtungsabschnitt an der hinteren Dachlamelle bei längerem Geschlossenhalten der Dachanordnung anhaften kann, oder im Laufe der Zeit seine elastische Vorspannung verliert, und dann seine Bewegung nach oben zur Freigabe der Schwallwasserrinne nicht mehr ausführt, so daß das gesamte, auf dem Lamellenelement befindliche Wasser von der zusätzlichen kleineren Wasserrinne aufgenommen und seitlich abgeleitet werden muß. In diesem Fall ist die zusätzliche kleine Wasserrinne mit der Abfuhr des Wasser überfordert, so daß Wasser ins Fahrzeuginnere eindringen kann.

Der vorliegenden Erfindung liegt daher die Aufgabe zugrunde, ein Fahrzeugdach der Eingangs genannten Art zu schaffen, bei dem das Eindringen von Wasser zwischen den Deckelelementen wirkungsvoll verhindert wird.

Diese Aufgabe wird durch ein Fahrzeugdach mit wenigstens zwei ausstellbaren Deckelelementen zum wahlweise Verschließen oder wenigstens teilweisen Freigeben einer Dachöffnung, mit seitlich entlang der Dachöffnung längs verlaufenden Wasserrinnen, einer in Fahrtrichtung an der Vorderkante des Deckelelements quer angeordneten wulstförmigen Dichtung, die bei geschlossenem Dach den Spalt zwischen benachbarten Deckelelementen dichend ausfüllt, einer primären, vorderhalb der wulstförmigen Dichtung angeordneten Rinne und einer vorderhalb der primären Rinne angeordneten zweiten Rinne gelöst, so daß zwei kaskadenförmig angeordnete Rinnen ausgebildet werden, wobei die Endseiten der primären und der sekundären Rinne über den seitlich entlang der Dachöffnung längs verlaufenden Wasserrinnen angeordnet sind, um bei ausgestellten Deckelelementen auf dem Deckelelement befindliches Wasser abzuleiten.

Durch diese Gesamtanordnung ist es möglich, das Eindringen von auf dem Deckelelement befindlichem Wasser erfolgreich zu verhindern, wobei auf einen wasserführenden Himmel verzichtet werden kann. Die im Spalt zwischen den Deckelelementen befindliche wulstförmige Dichtung verhindert das Eindringen von Wasser bei geschlossenem Zustand des Daches, wobei die Erzeugung von Windgeräuschen unterdrückt wird. Beim Öffnen des Daches oder bei geöffnetem Dach verhindert die primäre Rinne das Eindringen von Wasser, indem vom Deckelelement ablaufendes Wasser über die primäre Rinne zu den seitlichen Rinnen abgeführt wird. Für den Fall, daß eine Große Wassermenge abzuführen ist, die über die primäre Rinne nicht mehr zu bewältigen ist, ist die zusätzliche sekundäre Rinne vorgesehen, wodurch das Eindringen von Wasser in das Fahrzeuginnere unter allen Bedingungen verhindert werden kann.

Weitere Ausgestaltungen ergeben sich aus den Unteransprüchen.

Vorteilhafter Weise ist die sekundäre Rinne als eine U-förmige Schiene ausgebildet, die über eine Klebeverbindung an der unteren Vorderseite des Deckelelements befestigt ist. Dadurch dient die Schiene nicht nur als Wasserablaufrinne sondern auch zur Versteifung des Deckelelements, insbesondere dann, wenn das Deckelelement eine durchsichtige Scheibe aus Glas oder Kunstglas ist. Weiterhin kann die Schiene noch dazu dienen, die wulstförmige Dichtung auf einfache Weise aufzunehmen, ohne zusätzliche Befestigungseinrichtungen für die Dichtung vorsehen zu müssen.

Weiterhin kann die primäre Rinne als eine einstückig mit der wulstförmigen Dichtung ausgebildete Lippe vorgesehen sein, die bei geschlossenem Dach gegen die hintere Unterseite des vorderen, benachbarten Deckelelements drückt und somit auf vorteilhafte Weise eine zusätzliche Dichtung darstellt.

Auf der hinteren Unterseite des vorderen, benachbarten Deckelelements kann eine in Breitenrichtung sich erstreckende Leiste über eine Klebeverbindung befestigt sein, die als weitere Versteifung des Deckelelements dient. Wenn die Leiste derart angeordnet ist, daß sie bei geschlossenem Dach von der U-förmigen Schiene aufgenommen wird, so dient diese ineinander greifende Anordnung von Schiene und Leiste als eine Einbruchsicherung, da sich bei Druck von oben auf das Dach die Schiene und die Leiste ineinander verkeilen.

Bevorzugte Ausführungsbeispiele der Erfindung werden im folgenden unter Bezugnahme auf die Zeichnungen im Detail beschieben. Es zeigen:
Fig. 1 eine Schnittansicht des Fahrzeugdachs in geschlossener Stellung;
Fig. 2 eine Schnittansicht des Fahrzeugdachs in geöffneter Stellung;
Fig. 3 eine Teilschnittansicht des Fahrzeugdachs in geschlossener Stellung;
Fig. 4 eine Teilschnittansicht des Fahrzeugdachs in geöffneter Stellung.
Fig. 5 eine Teilschnittansicht als Variante zur Fig. 3 und
Fig. 6 eine Teilschnittansicht als weitere Variante zur Fig. 3

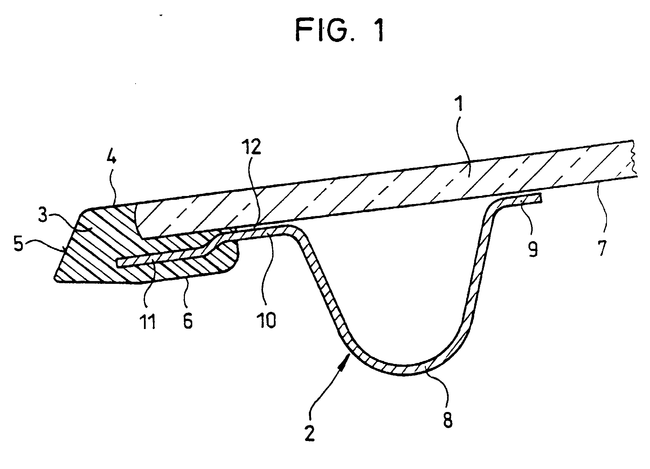

Gemäß Fig. 1 und Fig. 2 ist in der festen Dachfläche 10 eines Kraftfahrzeugs eine Dachöffnung 12 vorgesehen, die mittels ausstellbarer und in Fahrzeuglängsrichtung verschiebbarer Deckelelementen 14a bis 14d, welche in seitlich entlang der Dachöffnung verlaufenden Führungsschienen (nicht dargestellt) geführt sind, wahlweise verschlossen (siehe Fig. 1) oder wenigstens teilweise freigegeben (siehe Fig. 2) werden kann. In Fahrzeuglängsrichtung sind an beiden Seiten der Dachöffnung 12 seitliche Wasserrinnen (nicht dargestellt) angeordnet. Die Führungsschienen können auch mit einem Teil ihres Profils als seitliche Wasserrinnen dienen.

In Fahrtrichtung 16 am vorderen Ende der Dachöffnung 12 ist ein klappbarer plattenartiger, sich quer zur Fahrtrichtung erstreckender Windabweiser 18 vorgesehen, der an der vorderen Querkante der Dachöffnung 12 angelenkt ist. Bei geschlossenem Zustand der Dachanordnung bilden die feste Dachfläche 10, der Windabweiser 18, und die Deckelelemente eine Fläche, die sich sowohl vorne und hinten als auch seitlich leicht nach unten wölbt. Bei geöffneter Dachanordnung klappt der Windabweiser 18 nach oben und die Deckelelemente 14a bis 14d stehen mit ihrem hinteren Endabschnitt 20a bis 20d über die feste Dachfläche 10 hinaus, wobei ihre vorderen Endabschnitte 22a bis 22d schräg nach vorne unten geneigt angeordnet sind. Dabei sind die vorderen Endabschnitte 22a bis 22d der Deckelelemente 14a bis 14d in etwa bündig zur Dachöffnung 12 angeordnet. Auf der Fahrzeuginnenseite, also unterhalb der Deckelelemente 14a bis 14d ist ein faltbarer Himmel 21 angeordnet, der sich bei geöffnetem Dach in die Zwischenräume zwischen den aufgestellten Deckelelementen 14a bis 14d einfaltet.

Gemäß Fig. 3 und Fig. 4 ist eine detailierte Schnittansicht der Dachanordnung in geschlossenem (Fig. 3) und in geöffnetem Zustand (Fig. 4) dargestellt. Gemäß Fig. 3 stoßen in geschlossenem Zustand der hintere Endabschnitt 20a des vorderen Deckelelements 14a und der vordere Endabschitt 22b des hinteren Deckelelements 14b unter Ausbildung eines quer zur Fahrtrichtung 16 verlaufenden Spalts 24 aneinander. Unterhalb des Spalts 24 ist eine wulstförmige Dichtung 25 vorgesehen, die den Spalt 24 teilweise ausfüllt und dabei abdichtet. Die Dichtung 25 wird wiederum von einer unterhalb der Deckelelemente 14a bis 14d angeordneten Schiene 26 gehalten. Die Deckelelemente 14a bis 14d sind im wesentlichen als dünne rechteckige Platten ausgebildet, die aus getöntem oder nicht getöntem Glas oder Kunstglas hergestellt sind.

Auf der Unterseite des vorderen Endabschnitts 22b des hinteren Deckelelements 14b, d.h. auf der Fahrzeuginnenseite, ist die Schiene 26 über eine Klebeverbindung 28 mit dem Deckelelement 14b verbunden. Die Schiene 26 ist quer zur Fahrtrichtung und parallel zur hinteren Endseite 31a des vorderen Deckelelements 14a und zur vorderen Endseite 23b des hinteren Deckelelements 14b angeordnet. In Fahrtrichtung 16 gesehen hat die Schiene 26 eine Breitenerstreckung, so daß die Schiene den hinteren Endabschnitt 20a des Deckelelements 14a und den vorderen Endabschnitt 22b des vorderen Deckelelements 14b überdeckt.

Gemäß Fig. 3 ist die Schiene 26 als ein Strangpressteil bevorzugt aus einem Aluminiumwerkstoff hergestellt. Im Querschnitt gesehen hat die Schiene 26 eine vertikal angeordnete, hintere Wand 30, eine horizontal angeordnete untere Wand 32 und eine vertikal angeordnete vordere Wand 34. Die hintere Wand 30, die untere Wand 32 und die vordere Wand 34 bilden eine U-Form aus. Im mittleren Abschnitt der Schiene 26 ist eine vertikal angeordnete vordere Stegwand 36 und eine vertikal angeordnete hintere Stegwand 38 vorgesehen. Die zwei Stegwände 36 und 38 teilen den von der U-Form umschlossenen Raum der Schiene 26 in etwa drei gleich große Abschnitte auf. Zwischen der hinteren Wand 30 und der hinteren Stegwand 38 ist eine hintere Deckenwand 40 angeordnet, so daß ein hinterer Hohlraum 42 ausgebildet wird. Die hintere Wand 30 und die hintere Stegwand 38 ragen etwas über die hintere Deckwand 40 hinaus, um ein U-förmiges Becken 44 zur Aufnahme eines Klebstoffstranges 46 auszubilden. An der Oberseite der hinteren Deckenwand 40 sind längsverlaufende noppenartige Stege (Fortsatz 48) ausgebildet, die zur besseren Anhaftung des Klebstoffes 46 dienen. Zwischen der hinteren Stegwand 38 und der vorderen Stegwand 36 ist eine vordere Deckenwand 50 angeordnet, so daß ein vorderer Hohlraum 52 umschlossen wird. In der vorderen Deckenwand 50 ist in etwa in Verlängerung der vorderen Stegwand 36 eine nach oben geöffnete, im Querschnitt C-förmige Haltenut 54 ausgebildet. Die vordere Wand 34, die untere Wand 32 und die vordere Stegwand 36 sind nach oben geöffnet, um eine U-förmige sekundäre Wasserrinne 56 auszubilden, die an den seitlichen Endseiten über den seitlichen Wasserrinnen der Dachöffnung (nicht dargestellt) endet, so daß Wasser über die U-förmige Wasserrinne in die seitlichen Wasserrinnen abgeführt werden kann.

Auf der vorderen Deckenwand 50 ist die wulstförmige, aus einem elastisch verformbaren Gummimaterial hergestellte Dichtung 25 gelagert. Die in der Zeichnung in unverformter entspannter Form dargestellte Dichtung 25 hat im Querschnitt gesehen eine Bodenwand 58, an der an einem mittleren Abschnitt ein im Querschnitt pilzförmiger Fortsatz 60 ausgebildet ist. Der Fortsatz 60 ist passend zur C-förmigen Haltenut 54 der Schien 26 ausgebildet. Von der Bodenwand 58 ausgehend erstreckt sich eine halbkreisförmige, wulstförimge Wand 62 nach oben, die einen Hohlraum 64 einschließt. Im in Fahrtrichtung 16 hinteren Abschnitt des Hohlraums 64 ist ein vertikal angeordneter Steg 66 zur Versteifung der wulstförmigen Wand 62 ausgebildet. Die Bodenwand 58 ist nach vorne (Pfeil 16) über die wulstförmige Wand 62 hinaus verlängert ausgebildet, wobei an der vorderen Stirnseite sich eine Lippe 68 nach oben und etwas nach hinten geneigt erstreckt. Zwischen der Lippe 68 und der wulstförmigen Wand 62 wird somit eine primäre Wasserrinne 70 ausgebildet.

Die Dichtung 25 wird mit dem pilzförmigen Fortsatz 60 in die C-förmigen Haltenut 54 der Schiene eingesetzt, dabei wird bei geschlossenem Dach die wulstförmige Wand 64 gegen die vordere Endseite 31b des hinteren Deckelelements 14b und gegen die hintere Endseite 23a des vorderen Deckelelements 14a gepresst, so daß der Spalt 24 zumindest teilweise ausgefüllt und damit nach außen hin abgedichtet wird. Bei geschlossenem Dach wird die Lippe 68 gegen die Unterseite des hinteren Abschnitts 20a des vorderen Deckelelements 14a gedrückt, um eine zusätzliche Abdichtung auszubilden. Beim Öffnen des Daches oder bei geöffnetem Dach fängt die zwischen der Lippe 68 und der wulstförmigen Wand 62 ausgebildete primäre Wasserrinne 70 das vom hinteren Deckelelement 14b ablaufende Wasser auf und leitet das Wasser in die seitlichen, an der Dachöffnung vorgesehenen Wasserrinnen (nicht dargestellt) ab. Für den Fall, daß ein starker Wasserschwall über das hintere Deckelelement 14b abläuft, (siehe Fig. 4), wobei die primäre Wasserrinne 56 überflutete wird, wird das über die primäre Rinne 70 laufende Wasser von der unterhalb und vorderhalb der primären Wasserrinne 70 angeordneten an der Schiene 26 ausgebildeten, sekundären Wasserrinne 56 aufgefangen und ebenso in die seitlich der Dachöffnung 12 verlaufenden Wasserrinen abgeführt. Somit ist unter allen Umständen gewährleiste, daß kein Wasser in das Fahrzeuginnere eindringen kann.

Am hinteren Endabschnitt 20a des vorderen Deckelelements 14a ist auf der Unterseite des Deckelelements 14 eine Leiste 72 über eine Klebeverbindung 74 angeordnet, die bei geschlossenem Dach parallel und benachbart zur vorderen Wand 34 der Schiene 26 ausgerichtet ist. Die Leiste 72 ist als ein Strangpressteil ausgebildet, das bevorzugt aus einem Aluminiumwerkstoff hergestellt ist. Die Leiste 72 hat im wesentlichen ein als Vierkant ausgebildets Hohlprofil 76 und dient zur Versteifung des hinteren Abschnitts 20a des vorderen Deckelelements 14a.
Im Querschnitt gesehen ist die Außenkontur der Leiste 72 und die Außenkontur der Schiene 26 komplementär zueinander gestaltet, so daß die Leiste 72 und die Schiene 26 optisch eine Einheit bilden.

Durch die sowohl in der Schiene 26 ausgebildeten Hohlräume 42 und 52 als auch durch den in der Leiste 72 ausgebildete Hohlraum werden sehr steife und formstabile Profile zur Verfügung gestellt, die dazu dienen das Deckelelement 14a bis 14d auf einfache Weise zu versteifen.

Alternativ hierzu kann die Leiste 72 auch derart angeordnet sein, daß bei geschlossenem Dach die Leiste 72 in der sekundären Wasserrinne 56 der Schiene 26 zu liegen kommt. Bei dieser Anordnung wird ein zusätzlicher Beitrag zur Einbruchsicherung geliefert, da sich bei äußerer Krafteinwirkung auf das Dach die sekundäre Rinne 56 und die Leiste 72 verhaken und somit das Einbrechen in das Fahrzeug über das Dach erschweren.

Vorstehend wurde die Anordnung beispielhaft an einem Verbindungsstoß zweier aneinander grenzender Deckelelemente 14a und 14b beschrieben. Es ist selbstverständlich, daß diese Verbindungsart auch auf die anderen Verbindungsstöße zwischen zwei Deckelelementen 14a bis 14d und auch in angepasster Form auf den Verbindungsstoß des vordersten Deckelelements 14a mit der vorderen Kante der Dachöffnung 12 und auf den Verbindungsstoß des hintersten Deckelelements 14d mit der hinteren Kante der Dachöffnung 12 anwendbar ist.

Durch die vorstehend beschriebene Dachanordnung ist man frei in der Gestaltung des Himmels 21, da dieser keine wasserführenden Aufgaben erfüllen muß, so daß einerseits auf den Himmel 21 ganz verzichtet werden kann oder anstatt des Himmels ein Rollo (nicht dargestellt) oder ein aus ineinander verschiebbaren Platten (nicht dargestellt) ausgebildeter Himmel verwendet werden kann.

Anstatt die Deckelelemente 14a bis 14d aus einer Glasplatte herzustellen, können diese auch aus gebogenem Blech oder ähnlichem hergestellt sein.

Wie in den Fig. 3, 5 und 6 in unterschiedlichen Varianten dargestellt, ist es vorteilhaft, wenn die vordere Wand 34 der sekundären Wasserrinne 56 mit ihrer Oberkante gegen die Unterseite des jeweils vorausliegenden Deckelelements 14a bis 14d anliegt. Durch ein Andrücken können Wölbungsunterschiede an den Deckelelementen definiert ausgeglichen werden. Zum anderen kann durch das Anliegen eines elastischen Abschlußprofils 77, welches auf die Oberkante der vorderen Wand 34 aufgesteckt ist, eine zusätzliche Abdichtung der sekundären Rinne 56 nach vom geschaffen werden.

In der Fig. 3 drückt ein nur begrenzt elastisches Abschlußprofil 77 mit seiner Oberkante gegen die Unterseite des Deckelelements 14a. Dabei wird diesem Deckelelement 14a im Bereich seiner Hinterkante eine von der Form des Abschlußprofils 77 vorgegebene Kontur bzgl. seiner Wölbung aufgeprägt.

In einer in Fig. 5 dargestellten Variante drückt das Abschlußprofil 77 gegen eine Dichtung 78, die an der Unterseite des Deckelements 14a befestigt ist. Die Dichtung 78 setzt sich hierbei aus einem elastisch verformbaren Hohlkammerteil 78A und einer im inneren des Hohlkammerteils angeordneten Innenrippe 78B zusammen, die relativ hart gegenüber dem Material des Hohlkammerteils 78A ausgebildet ist. Dabei dient der sich verformende Hohlkammerteil 78A der Abdichtung der sekundären Wasserrinne 56 nach vorn; wenn sich der Hobkammerteil 78A verformt hat und die Innenrippe 78B an der oberen Wand des Hohlkammerteils 78A anliegt, kann das Abschlußprofil 77 durch Andrücken wiederum die Kontur des Deckelelements 14a bezüglich seiner Wölbung bestimmen.

In Fig. 6 ist eine weitere Variante dargestellt, bei der das Abschlußprofil 77 wiederum aus einem relativ steifen, nur begrenzt elastischen Material ausgebildet ist. Dieses drückt unmittelbar gegen die Unterseite des Deckelelements 14A und prägt diesem eine entsprechende Wölbungskontur auf Am Abschlußprofil ist zusätzlich eine Dichtlippe 79 angeordnet, welche sich zusätzlich an die Unterseite des Deckelelements 14a anlegt und dabei eine weiche Abdichtung der sekundären Wasserrinne 56 nach vorne bewirkt.

Die vorstehend beschriebene zusätzliche Abdichtung der sekundären Wasserrinne 56 gegenüber dem vorausliegenden Deckelelement 14a verbessert auch die Geräuschdämmung des Innenraums gegenüber Fahrtwindgeräuschen, insbesondere bei Fahrzeugen, die für hohe Geschwindigkeiten geeignet sind.

### Bezugszeichenliste

- 10: feste Dachfläche
- 12: Dachöffnung
- 14a-14d: Deckelelemente
- 16: Fahrtrichtung
- 18: Windabweiser
- 20a-20d: hinterer Endabschnitt der Deckelelemente
- 21: Himmel
- 22a-22d: vorderer Endabschnitt der Deckelelemente
- 23a-23d: hintere Endseite
- 24: Spalt
- 25: wulstförmige Dichtung
- 26: Schiene
- 28: Klebeverbindung
- 30: hintere Wand
- 31a-31d: vordere Endseite
- 32: untere Wand
- 34: vordere Wand
- 36: vordere Stegwand
- 38: hintere Stegwand
- 40: hintere Deckenwand
- 42: hinterer Hohlraum
- 44: U-förmiges Becken
- 46: Klebstoffstrang
- 48: Fortsatz
- 50: vordere Deckenwand
- 52: vorderer Hohlraum
- 54: Haltenut
- 56: U-förmige (sekundäre) Wasserrinne
- 58: Bodenwand
- 60: pilzförmiger Fortsatz
- 62: wulstförmige Wand
- 64: Hohlraum
- 66: Steg
- 68: Lippe
- 70: primäre Wasserrinne
- 72: Leiste
- 74: Klebeverbindung
- 76: Hohlprofil
- 77: Abschlußprofil
- 78: Dichtung
- 78 A: Hohlkammerteil
- 78 B: Innenrippe
- 79: Dichtlipppe

## Patentansprüche

1. Fahrzeugdach mit wenigstens zwei ausstellbaren Deckelelementen (14a bis 14d) zum wahlweise Verschließen oder wenigstens teilweisen Freigeben einer Dachöffnung (12), mit seitlich entlang der Dachöffnung längs verlaufenden Wasserrinnen, einer in Fahrtrichtung (16) an der vorderen Endseite (31b) des Deckelelements (14b) quer angeordneten wulstförmigen Dichtung (25), die bei geschlossenem Dach einen Spalt (24) zwischen benachbarten Deckelelementen (z.B. 14a und 14b) dichtend ausfüllt, einer ersten vor der wulstförmigen Dichtung (25) angeordneten primären Rinne (70) und einer vor der primären Rinne (70) angeordneten sekundären Rinne (56), so daß zwei kaskadenförmig angeordnete Rinnen (70 und 56)) ausgebildet werden, wobei die Endseiten der primären und der sekundären Rinne (70 bzw. 56) über den seitlich entlang der Dachöffnung längs verlaufenden Wasserrinnen angeordnet sind, um das bei ausgestellten Deckelelementen (14a bis 14d) auf den Deckelelementen ggf. befindliches Wasser abzuleiten.

2. Fahrzeugdach nach Anspruch 1, **dadurch gekennzeichnet,** daß die primäre Rinne (70) einstückig mit der wulstförmigen Dichtung (25) ausgebildet ist.

3. Fahrzeugdach nach Anspruch 1 oder 2, **dadurch gekennzeichnet**, daß die sekundäre Rinne (56) als eine U-förmige Schiene (26) ausgebildet ist.

4. Fahrzeugdach nach Anspruch 3, **dadurch gekennzeichnet**, daß die Schiene (26) einen Befestigungsabschnitt (Becken 44) aufweist, über den die Schiene an einem vorderen Endabschnitt (22b) mit der Unterseite des Deckelelements (14a bis 14d) verbunden ist.

5. Fahrzeugdach nach Anspruch 4, **dadurch gekennzeichnet**, daß die Verbindung zwischen dem Befestigungsabschnitt (Becken 44) und der Unterseite des Deckelelements (14a bis 14d) als Klebeverbindung (28) ausgebildet ist.

6. Fahrzeugdach nach einem der Ansprüche 3 bis 5, **dadurch gekennzeichnet**, daß die wulstförmige Dichtung (25) in der U-förmigen Schiene (26) befestigt ist.

7. Fahrzeugdach nach einem der vorstehenden Ansprüche 1 bis 6, **dadurch gekennzeichnet**, daß die primäre Wasserrinne (70) zwischen einer an der wulstförmigen Dichtung (25) ausgebildeten, nach oben und nach hinten vorstehenden elastischen Lippe (68) und einer wulstförmigen Wand (62) der wulstförmigen Dichtung (25) angeordnet ist.

8. Fahrzeugdach nach Anspruch 7, **dadurch gekennzeichnet**, daß die Lippe (68) bei geschlossenem Dach an der Unterseite des hinteren Abschnitts (23a) des benachbarten vorderen Deckelelements (14a) anliegt.

9. Fahrzeugdach nach einem der Ansprüche 3 bis 8, **dadurch gekennzeichnet**, daß eine Leiste (72) parallel zur Schiene (26) angeordnet ist, die mittels einer Klebeverbindung (74) am Deckelelement (14a) befestigt ist, wobei die Leiste (72) in geschlossenem Zustand des Fahrzeugdachs an der Unterseite des hinteren Abschnitts (22a) des benachbarten vorderen Deckelelements (14a).angeordnet ist.

10. Fahrzeugdach nach Anspruch 9, **dadurch gekennzeichnet**, daß die Leiste (72) bei geschlossenem Dach in der sekundären Rinne (56) angeordnet ist.

11. Fahrzeugdach nach einen der vorhergehenden Ansprüche, **dadurch gekennzeichnet**, daß eine Oberkante einer vorderen Wand (34) der sekundären Rinne (56) gegen die Unterseite eines davor liegenden Deckelelements (14a bis 14d) drückt.

12. Fahrzeugdach nach Anspruch 11, **dadurch gekennzeichnet**, daß an der vorderen Oberkante der sekundären Rinne (56) ein begrenzt elastisches Abschlußprofil (77) angeordnet ist.

13. Fahrzeugdach nach Anspruch 12, **dadurch gekennzeichnet**, daß das Abschlußprofil (77) gegen eine Dichtung (78) am an der Unterseite davorliegenden Deckelelement (14a) drückt.

14. Fahrzeugdach nach Anspruch 12 oder 13, **dadurch gekennzeichnet**, daß am Abschlußprofil (77) eine zusätzliche Dichtlippe vorgesehen ist, die sich an die Unterseite des davorliegenden Deckelelements (14a) anlegt.

15. Fahrzeugdach nach Anspruch 11 bis 14, **dadurch gekennzeichnet**, daß der Druck der Oberkante der vorderen Wand (34) dem vorausliegenden Deckelelement (14a) im Bereich seiner Hinterkante eine definierte Wölbung aufprägt.
